# EUROPEAN PATENT APPLICATION

(11) **EP 3 135 614 A1**
(43) Date of publication of application: **01.03.2017**
(21) Application number: 15850903.4
(22) Date of filing: 28.08.2015
(51) Int. Cl.: B65G 47/36, B07C 5/36, B65B 23/06, B65B 35/30, B65G 47/46

(54) **DISTRIBUTING AND TRANSPORTING DEVICE, DISTRIBUTING AND TRANSPORTING METHOD, SORTING AND PACKAGING DEVICE, AND SORTING AND PACKAGING FACILITY**

(30) Priority: 15.10.2014 JP 2014211221
(71) Applicant: Nabel Co., Ltd., Kyoto-shi Kyoto 601-8444 (JP)
(72) Inventor: NAMBU, Takahiko, Kyoto-shi Kyoto 601-8444 (JP); SAIDA, Kazuki, Kyoto-shi Kyoto 601-8444 (JP)
(74) Representative: Prüfer & Partner mbB Patentanwälte · Rechtsanwälte
(86) International application number: PCT/JP2015/074325
(87) International publication number: WO 2016/059892

(57) **Abstract**

There is provided a distributing and conveying apparatus that achieves high-speed and stable distribution and conveyance by reducing a distance between centers of preceding and following articles adjacent to each other in a conveyance direction. There is provided a distributing and conveying apparatus (1) for distributing articles (E) at respective predetermined locations while conveying the articles, the distributing and conveying apparatus including: a distributing and ejecting unit (8) configured to convey a plurality of articles (E) in a staggered arrangement along a center line of a conveyance width, and eject the articles at respective distribution and ejection locations; and a receiving unit (9) configured to receive the articles (E) ejected by the distributing and ejecting unit (8) below the center line. In the distributing and conveying apparatus (1) according to the present invention, the articles (E) are conveyed in a staggered arrangement such that the preceding and following articles (E) in the conveyance direction (21) do not interfere with each other, and the articles (E) are ejected along the center line of the conveyance width, and thus, the ejected articles (E) can be received by the receiving unit (9) provided below the center line.

## Description

### TECHNICAL FIELD

The present invention relates to a distributing and conveying apparatus and a distributing and conveying method for distributing articles at respective predetermined locations while conveying the articles.

### BACKGROUND ART

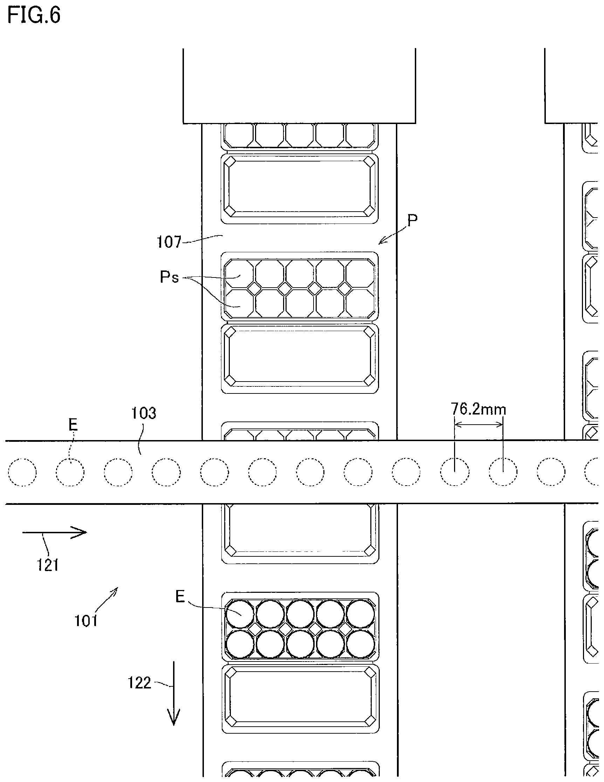

Conventionally, as an apparatus for distributing and conveying articles, there has been a distributing and conveying apparatus 101 for conveying, as articles, eggs E each having an assumed girth maximum diameter of 50 mm as shown in Fig. 6. Fig. 6 is a plan view showing a main portion of conventional distributing and conveying apparatus 101.

In conventional distributing and conveying apparatus 101, eggs E are conveyed by a plurality of rows of supplying and conveying means (not shown) on the upstream side in a distribution and conveyance direction 121, and are transferred to distributing and conveying means 103 at a terminal end of the supplying and conveying means. Distributing and conveying means 103 conveys a plurality of eggs E in one row, and eggs E are held by distributing and conveying means 103 with 76.2-mm pitch (a distance between the centers of the preceding and following articles adjacent to each other in the conveyance direction).

Distributing and conveying means 103 conveys eggs E in distribution and conveyance direction 121, and ejects eggs E on container conveying means 107 which is a gathering place corresponding to the weight of each egg E. Container conveying means 107 is a conveyor for conveying containers P in a container conveyance direction 122, and receiving means (not shown) is provided between distributing and conveying means 103 and container conveying means 107. The receiving means receives eggs E ejected by distributing and conveying means 103, and fills eggs E into egg housing seats Ps of container P on container conveying means 107.

An example of the conventional distributing and conveying apparatus that conveys the eggs with 76.2-mm pitch as described above is a distributing and conveying apparatus described in PTD 1.

In a grading and packaging facility where conventional distributing and conveying apparatus 101 shown in Fig. 6 is used, a large amount of eggs are distributed and conveyed every day. In the grading and packaging facility where a large amount of eggs are distributed and conveyed, speed-up of distribution and conveyance has been conventionally requested in order to shorten the work time.

In order to respond to such request for speed-up, conventional distributing and conveying apparatus 101 shown in Fig. 6 can convey a large amount of eggs, i.e., 30000 eggs per hour. However, in order to convey a large amount of eggs, i.e., 30000 eggs per hour, the eggs must be conveyed and ejected toward the receiving means at high speed of 30000 eggsx76.2 mm÷60 min=38.1 m/min.

When the receiving means receives the ejected eggs, the impact is applied to the eggs due to the kinetic energy produced by gravity acceleration and the kinetic energy produced by conveyance by the distributing and conveying apparatus. Since the kinetic energy increases in proportion to the square of the speed, the impact applied to the eggs becomes greater as the speed of conveyance of the eggs by the distributing and conveying apparatus becomes higher. Therefore, an egg breakage rate rises because fragile articles such as eggs are vulnerable to the impact. Particularly, packed eggs sold at a retail store can no longer be sold as commercial products if even just a little crack appears in their eggshells, and thus, the eggs are handed over to a processor at a cheap price for use as liquid eggs to be processed into noodle, bread or the like.

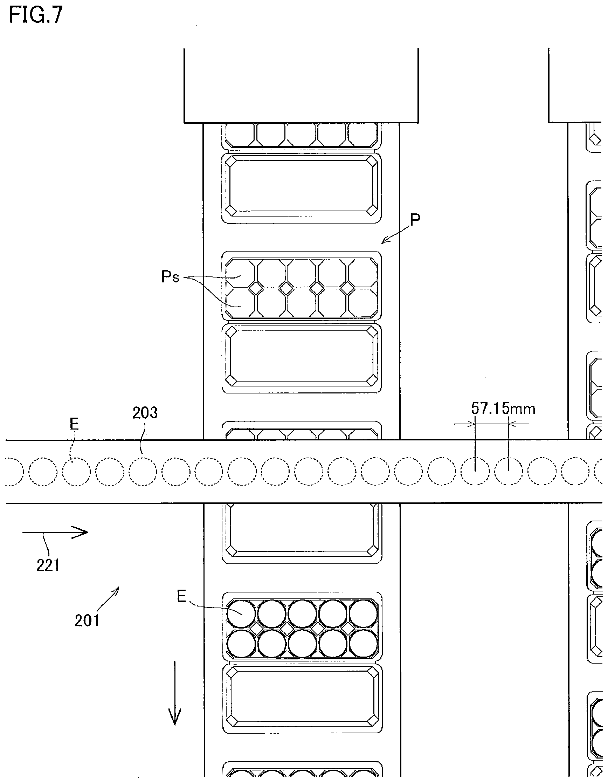

For the above-described reason, reduction in egg breakage rate has been requested in the distributing and conveying apparatus. In order to reduce the egg breakage rate, it is necessary to reduce the conveyance speed during distribution and conveyance of the eggs to be lower than 38.1 m/min to decrease the kinetic energy of the eggs. Thus, there is proposed a distributing and conveying apparatus in which a pitch between conveyed eggs is reduced to be smaller than 76.2 mm in order to reduce the speed of conveyance of the eggs, thereby reducing the conveyance speed while maintaining an amount of eggs conveyed per hour. Fig. 7 is a plan view showing a main portion of such another conventional distributing and conveying apparatus 201.

Similarly to conventional distributing and conveying apparatus 101, another conventional distributing and conveying apparatus 201 conveys, as articles, a plurality of eggs E each having an assumed girth maximum diameter of 50 mm in one row in a distribution and conveyance direction 221. However, eggs E are held by distributing and conveying means 203 with 57.15-mm pitch that is smaller than that of conventional distributing and conveying apparatus 101.

An example of another conventional distributing and conveying apparatus that conveys the eggs with 57.15-mm pitch as described above is a distributing and conveying apparatus described in PTD 2.

In order to convey 30000 eggs per hour by another conventional distributing and conveying apparatus 201 shown in Fig. 7, the eggs may be conveyed at a speed of 30000 eggsx57.15 mm÷60 min=28.575 m/min. This is 75% of the speed of conventional distributing and conveying apparatus 101 shown in Fig. 6 that conveys the eggs with 76.2-mm pitch, and the kinetic energy of the eggs produced by conveyance can be reduced by approximately 46%, which contributes to reduction in egg breakage rate.

### CITATION LIST

### PATENT DOCUMENT

PTD 1: Japanese Patent Laying-Open No. 2006-44859
PTD 2: Japanese Patent Laying-Open No. 2008-179475

### SUMMARY OF INVENTION

### TECHNICAL PROBLEM

In recent years, integration and scale enlargement have progressed particularly in a facility for grading and packaging eggs, and several million eggs are graded and packaged and shipped in one day. Therefore, if the egg breakage rate is improved, for example, by 0.1 %, the number of eggs that can be shipped increases by several thousand eggs per day, and shipment increases by several hundreds of thousands of eggs per year. For the above-described reason, further reduction in egg breakage rate has been requested in the distributing and conveying apparatus. In order to further reduce the egg breakage rate, it is necessary to reduce the conveyance speed during distribution and conveyance of the eggs to be lower than 28.575 m/min to decrease the kinetic energy of the eggs.

However, when the speed of conveyance of the eggs is reduced to be lower than 28.575 m/min, with the pitch between the conveyed eggs being maintained at 57.15 mm, the amount of eggs that can be conveyed per hour decreases. Then, in the egg grading and packaging facility with advanced integration and scale enlargement, the work time increases and the grading and packaging facility operating cost such as personnel expenses increases even if the egg breakage rate can be reduced. Therefore, this is not realistic.

In addition, in order to reduce the conveyance speed during distribution and conveyance, with the amount of eggs that can be conveyed per hour being maintained, it is necessary to reduce the pitch between the conveyed eggs to be smaller than that of the conventional art. However, the assumed girth maximum diameter of the egg is 50 mm, and thus, even when an attempt is made to reduce the pitch between the conveyed eggs, there is a restriction that it is physically impossible to reduce the pitch between the eggs lined up on a straight line to be equal to or smaller than 50 mm.

This restriction is not limited to eggs, but is commonly applied to articles in which a distance between centers of preceding and following articles adjacent to each other in a conveyance direction cannot be reduced to be smaller than a width between a front end and a rear end of an article to be distributed and conveyed in the conveyance direction. There is also a restriction that the distance between the centers of the preceding and following articles adjacent to each other in the conveyance direction cannot be reduced due to mechanical conditions of reception and ejection of the articles in order to perform distribution and conveyance. A problem of the distributing and conveying apparatus is to avoid these restrictions and reduce the distance between the centers of the preceding and following articles adjacent to each other in the conveyance direction.

The present invention has been made to solve the above-described problem, and an object of the present invention is to provide a distributing and conveying apparatus that achieves high-speed and stable distribution and conveyance by reducing a distance between centers of preceding and following articles adjacent to each other in a conveyance direction.

### SOLUTION TO PROBLEM

In order to solve the above-described problem, there is provided a distributing and conveying apparatus for distributing articles at respective predetermined locations while conveying the articles, the distributing and conveying apparatus including: a distributing and ejecting unit configured to convey a plurality of articles in a staggered arrangement along a center line of a conveyance width, and eject the articles at respective distribution and ejection locations; and a receiving unit configured to receive the articles ejected by the distributing and ejecting unit below the center line.

In the distributing and conveying apparatus according to the present invention, the articles are conveyed in a staggered arrangement such that the preceding and following articles in a conveyance direction do not interfere with each other, and the articles are ejected along the center line of the conveyance width, and thus, the ejected articles are received by the receiving unit provided below the center line.

### ADVANTAGEOUS EFFECTS OF INVENTION

According to the distributing and conveying apparatus of the present invention, high-speed and stable distribution and conveyance are achieved by reducing a distance between the centers of the preceding and following articles adjacent to each other in the conveyance direction.

### BRIEF DESCRIPTION OF DRAWINGS

Fig. 1 is a plan view showing a grading and packaging apparatus including a distributing and conveying apparatus according to an embodiment of the present invention.
Fig. 2 is a plan view showing a main portion of the distributing and conveying apparatus according to the embodiment of the present invention.
Fig. 3 is a plan view showing a main portion of another configuration of the distributing and conveying apparatus according to the embodiment of the present invention.
Fig. 4 is a cross-sectional view taken along line A-A in Fig. 2 according to the embodiment of the present invention.
Fig. 5 is a front view showing the main portion of the distributing and conveying apparatus according to the embodiment of the present invention.
Fig. 6 is a plan view showing a main portion of a conventional distributing and conveying apparatus.
Fig. 7 is a plan view showing a main portion of another conventional distributing and conveying apparatus.

### DESCRIPTION OF EMBODIMENTS

A first invention is directed to a distributing and conveying apparatus for distributing articles at respective predetermined locations while conveying the articles, the distributing and conveying apparatus including: a distributing and ejecting unit configured to convey a plurality of articles in a staggered arrangement along a center line of a conveyance width, and eject the articles at respective distribution and ejection locations; and a receiving unit configured to receive the articles ejected by the distributing and ejecting unit below the center line.

The staggered arrangement means that the articles to be distributed are arranged so as to be alternately displaced in different conveyance width directions with respect to the center line of the conveyance width. The distribution and ejection locations refer to locations where the articles distributed based on prescribed classification are ejected. In addition, the distributing and ejecting unit refers to a device or the like having the function of ejecting the articles to the distribution and ejection locations based on the prescribed classification.

According to the first invention, a distance between the centers of the adjacent articles can be reduced.

A second invention is particularly directed to the distributing and conveying apparatus according to the first invention, wherein the articles conveyed by the distributing and ejecting unit are arranged such that contours of the adjacent articles overlap each other when viewed from a conveyance width direction.

According to the second invention, the articles are arranged in a staggered manner such that the contours of the articles overlap each other, and thus, it is possible to provide the distributing and conveying apparatus in which the distance between the centers of the adjacent articles is smaller than a width between a front end and a rear end of the article in a conveyance direction when viewed from the conveyance width direction of the articles.

A third invention is particularly directed to the distributing and conveying apparatus according to the first or second invention, wherein the articles conveyed by the distributing and ejecting unit are arranged such that contours of the articles overlap each other when viewed from a conveyance direction.

According to the third invention, the articles are arranged in a staggered manner such that the contours of the articles overlap each other, and thus, it is possible to provide the distributing and conveying apparatus in which the conveyance width of the articles is smaller than a width of the two articles lined up in the conveyance width direction when viewed from the conveyance direction of the articles, and therefore, the receiving unit can receive the articles reliably.

A fourth invention is particularly directed to the distributing and conveying apparatus according to any one of the first to third inventions, wherein a width of reception of the articles by the receiving unit is wider than the conveyance width of the articles conveyed by the distributing and ejecting unit.

According to the fourth invention, the width when the receiving unit receives the articles conveyed in a staggered arrangement is wider than the conveyance width of the articles, and thus, the articles ejected by the distributing and ejecting unit can be received reliably.

A fifth invention is particularly directed to a grading and packaging apparatus including the distributing and conveying apparatus as recited in any one of the first to fourth inventions.

According to the fifth invention, the grading and packaging apparatus includes the distributing and conveying apparatus as recited in the first to fourth inventions, and thus, the impact applied to the distributed articles can be reduced as compared with a conventional grading and packaging apparatus. In addition, when the articles are conveyed at the same speed as the speed of articles conveyed by a conventional distributing and conveying apparatus, an amount of articles that can be graded and packaged per unit time can be increased.

A sixth invention is particularly directed to a grading and packaging facility including the grading and packaging apparatus as recited in the fifth invention.

At the time of construction, a grading and packaging facility is generally designed and constructed to house a grading and packaging apparatus having the required processing capability. Therefore, in order to enhance the processing capability of the conventional grading and packaging apparatus, an increase in size of the grading and packaging apparatus such as an increase in the number of distributing and conveying means is required, and thus, the grading and packaging facility must also be increased in size. According to the sixth invention, the grading and packaging facility includes the grading and packaging apparatus as recited in the fifth invention, and thus, when the articles are conveyed at the same speed as the speed of the articles conveyed by the conventional distributing and conveying means, an amount of articles that can be graded and packaged per unit time can be increased. Therefore, the increase in size of the grading and packaging apparatus is not required, and the grading and packaging facility can be made compact at the time of construction.

Not only at the time of construction but also at the time of removing an old grading and packaging apparatus and renewing the old grading and packaging apparatus into a grading and packaging apparatus having higher processing capability, the grading and packaging apparatus having the higher processing capability can be included with the same size as that of the conventional grading and packaging apparatus. Therefore, it is unnecessary to reconstruct the grading and packaging facility simultaneously with renewal of the grading and packaging apparatus.

A seventh invention is directed to a distributing and conveying method for distributing articles at respective predetermined locations while conveying the articles, the distributing and conveying method including: conveying a plurality of articles in a staggered arrangement along a center line of a conveyance direction, and ejecting the articles at respective distribution and ejection locations; and receiving the ejected articles below the center line.

According to the seventh invention, distribution and conveyance can be performed with the reduced distance between the centers of the adjacent articles.

### (Embodiment)

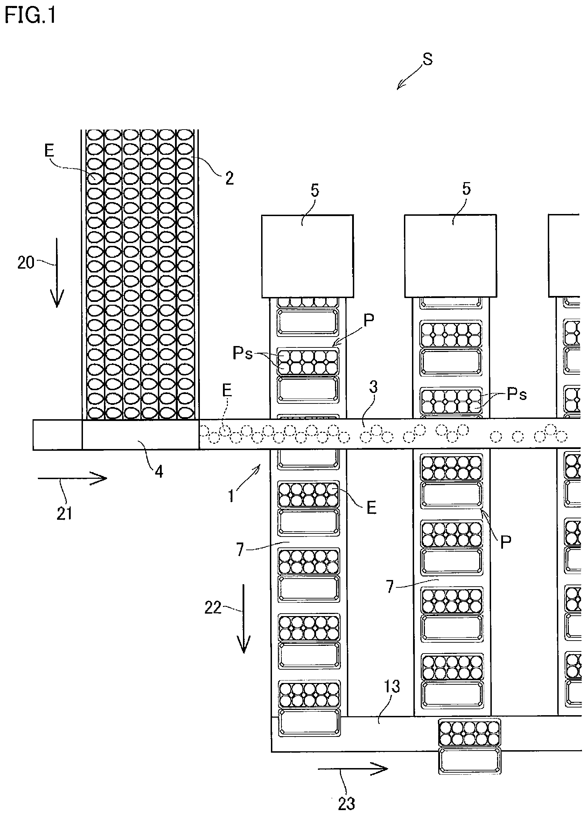

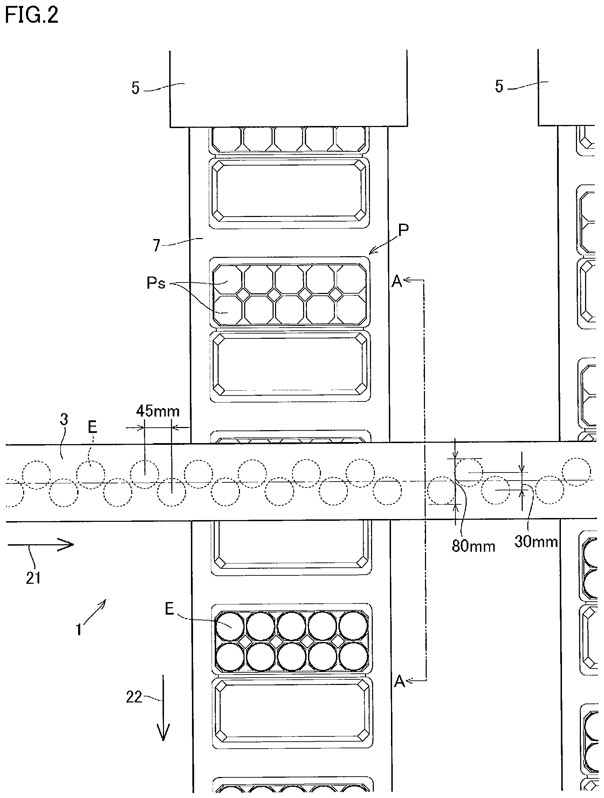

Hereinafter, a grading and packaging apparatus S for grading and packaging, as articles, eggs E each having an assumed girth maximum diameter of 50 mm, and a distributing and conveying apparatus 1 included in grading and packaging apparatus S will be described as a distributing and conveying apparatus according to an embodiment of the present invention. As shown in Fig. 1, grading and packaging apparatus S for eggs E includes distributing and conveying apparatus 1, a supplying and conveying unit 2, a transfer unit 4, and a container conveying unit 7. As shown in Figs. 2 to 5, distributing and conveying apparatus 1 includes a distributing and conveying unit 3 and a receiving unit 9.

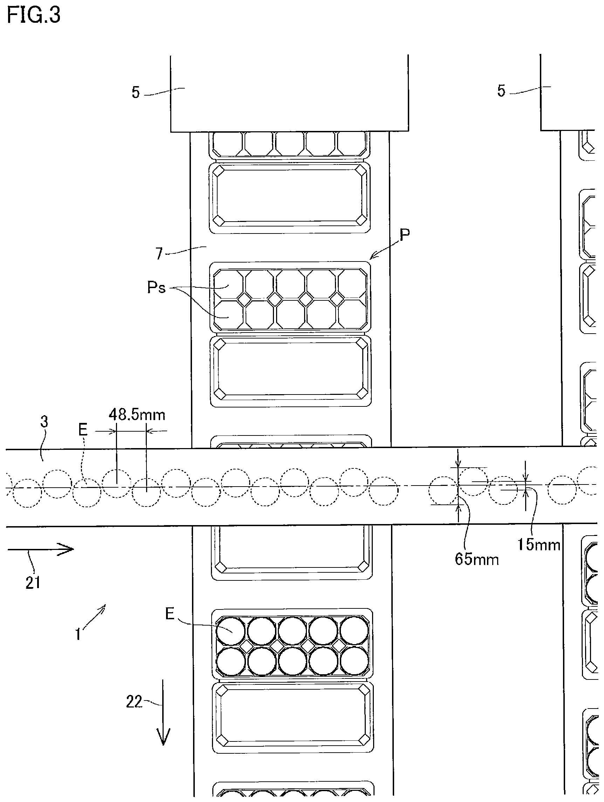

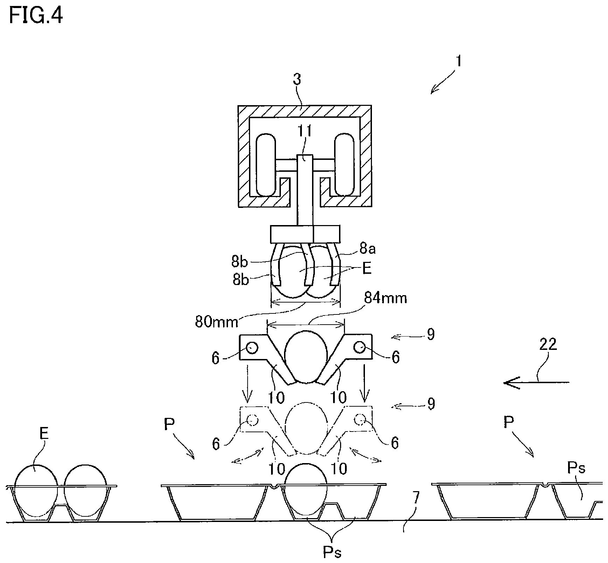

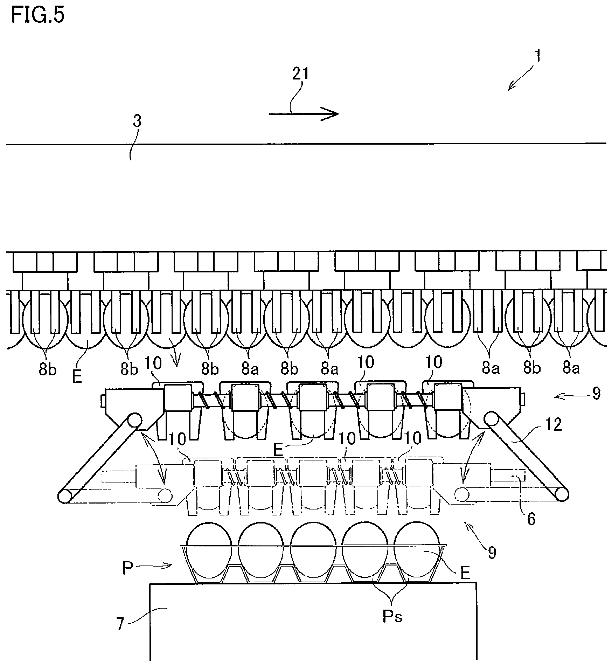

Fig. 1 is a plan view of grading and packaging apparatus S for eggs including distributing and conveying apparatus 1 according to the present embodiment. Fig. 2 is an enlarged plan view of a main portion of distributing and conveying apparatus 1. Fig. 3 is a plan view showing a main portion of another configuration of distributing and conveying apparatus 1. Fig. 4 is a cross-sectional view taken along line A-A in Fig. 2. Fig. 5 is a front view of the main portion of distributing and conveying apparatus 1 according to the present embodiment when viewed from the downstream side in a container conveyance direction 22.

First, supplying and conveying unit 2 will be described. Supplying and conveying unit 2 according to the present embodiment is a conveyor for conveying, in six rows in a supply and conveyance direction 20, eggs E laid at a laying house and transported to grading and packaging apparatus S. Supplying and conveying unit 2 conveys eggs E at equal intervals in supply and conveyance direction 20, with long axes of eggs E placed horizontally. Although distributing and conveying apparatus 1 according to the present embodiment distributes and conveys eggs E, distributing and conveying apparatus 1 according to the present embodiment can distribute and convey not only eggs E but also various articles. Distributing and conveying apparatus 1 according to the present embodiment has a configuration particularly suitable for distributing and conveying spherical articles including egg-shaped articles such as eggs E.

Next, transfer unit 4 will be described. Transfer unit 4 according to the present embodiment is a transfer apparatus for transferring eggs E conveyed in six rows by supplying and conveying unit 2 from supplying and conveying unit 2 to distributing and conveying unit 3.

When transfer unit 4 transfers, to distributing and conveying unit 3, eggs E conveyed by supplying and conveying unit 2 with the long axes of eggs E placed horizontally, transfer unit 4 changes the orientation of eggs E, so that the long axes of eggs E are placed vertically. Transfer unit 4 is provided with a weighing device for weighing eggs E, and when eggs E are transferred from supplying and conveying unit 2 to transfer unit 4, eggs E are individually weighed by the weighing device. The results of individual weighing of eggs E are associated with eggs E, respectively.

After transfer unit 4 according to the present embodiment receives eggs E from supplying and conveying unit 2, transfer unit 4 changes the arrangement of eggs E into a staggered arrangement and then transfers eggs E to distributing and conveying unit 3. The present invention is not limited thereto. The present invention may be configured such that transfer unit 4 passes eggs E to distributing and conveying unit 3 without changing the arrangement of eggs E when received from supplying and conveying unit 2, and distributing and conveying unit 3 changes the arrangement of eggs E into the staggered arrangement after distributing and conveying unit 3 receives eggs E. Alternatively, the present invention may be configured such that the arrangement of eggs E is first changed into the staggered arrangement in supplying and conveying unit 2 and then eggs E are passed to transfer unit 4.

Eggs E are conveyed in six rows at equal intervals in supplying and conveying unit 2, while eggs E are conveyed in one row in a staggered arrangement along a center line of a conveyance width in distributing and conveying unit 3. Therefore, transfer unit 4 is configured to change the orientation of the long axes of eggs E into the vertical direction and the arrangement of eggs E into the staggered arrangement, and at the same time, transfer eggs E to distributing and conveying unit 3 while accelerating eggs E in a distribution and conveyance direction 21.

Next, distributing and conveying unit 3 will be described. Distributing and conveying unit 3 is a conveyor for conveying a plurality of eggs E in distribution and conveyance direction 21 as shown in Fig. 2, and distributing and conveying unit 3 conveys the plurality of eggs E in a right-and-left staggered arrangement along the center line of the conveyance width shown by an alternate long and short dash line. In the present embodiment, description is given only about a forward path along which distributing and conveying unit 3 distributes and conveys eggs E, and no figures and description are given about a return path after distributing and conveying unit 3 distributes and conveys eggs E.

Distributing and conveying unit 3 is configured to convey eggs E without changing the orientation of the long axes changed into the vertical direction during transfer from supplying and conveying unit 2 by transfer unit 4. As shown in Fig. 2, a distance between the centers of preceding and following eggs E adjacent to each other in distribution and conveyance direction 21 is 45 mm, and the conveyance width of eggs E is 80 mm. In addition, a distance between the centers of eggs E in the conveyance width direction is 30 mm, and eggs E are conveyed with eggs E overlapping with the center line of the conveyance width.

The distance between the centers of preceding and following eggs E adjacent to each other in distribution and conveyance direction 21 is not limited to 45 mm. By reducing the distance between the centers of preceding and following eggs E adjacent to each other in distribution and conveyance direction 21 to be smaller than 45 mm, the conveyance speed of eggs E can be reduced even when the same amount of eggs E as that in the case of 45 mm are distributed and conveyed.

When the distance between the centers of preceding and following eggs E adjacent to each other in distribution and conveyance direction 21 is reduced, the distance between the centers of eggs E in the conveyance width direction may be increased in order to avoid interference between eggs E. The distance between the centers of preceding and following eggs E adjacent to each other in distribution and conveyance direction 21 and the distance between the centers of eggs E in the conveyance width direction are changed as appropriate, depending on the assumed maximum diameter and the like.

Fig. 3 shows another configuration of distributing and conveying apparatus 1 according to the present embodiment. As shown in Fig. 3, the distance between the centers of preceding and following eggs E adjacent to each other in distribution and conveyance direction 21 is 48.5 mm, and the conveyance width of eggs E is 65 mm. In addition, the distance between the centers of eggs E in the conveyance width direction is 15 mm, and eggs E are conveyed with eggs E overlapping with the center line of the conveyance width.

Since the distance between the centers of eggs E in the conveyance width direction is set to be 15 mm as described above, the conveyance width of eggs E can be narrowed to be 65 mm, and thus, the articles can be reliably received by receiving unit 9 described below.

Next, a holding unit 8 of distributing and conveying unit 3 will be described. As shown in Fig. 5, holding unit 8 is provided below distributing and conveying unit 3 and is configured to be capable of holding and conveying egg E by four fingers and ejecting egg E at a predetermined location. Holding units 8 hold eggs E such that eggs E are arranged in a right-and-left staggered manner along the center line of the conveyance width.

As shown in Fig. 4, a holding unit 8a for holding egg E located on the upstream side in container conveyance direction 22 (on the left side in distribution and conveyance direction 21 in Fig. 2), and a holding unit 8b for holding egg E located on the downstream side in container conveyance direction 22 (on the right side in distribution and conveyance direction 21 in Fig. 2) are present as holding units 8. Holding units 8 hold eggs E such that the contours of eggs E overlap each other when viewed from distribution and conveyance direction 21 (a direction perpendicular to the sheet of Fig. 4). In addition, as shown in Fig. 5, holding units 8 hold eggs E such that the contours of eggs E overlap each other when viewed from the conveyance width direction, and holding units 8a and 8b are arranged so as not to interfere with each other after holding units 8a and 8b eject eggs E.

Although the four fingers are used as holding unit 8 in the present embodiment, the present invention is not limited thereto. Three fingers may be used, for example. When the three fingers are used as holding unit 8, holding unit 8 is configured such that one finger opens inwardly in the conveyance width direction and two fingers open outwardly in the conveyance width direction. As a result, even when the distance between the centers of preceding and following eggs E adjacent to each other in distribution and conveyance direction 21 is reduced, the fingers holding egg E do not come into contact with each other.

Furthermore, holding unit 8 is not limited to the fingers for grasping and holding egg E, but may be a member referred to as so-called bucket for holding egg E so as to support egg E from below. When the bucket is used as holding unit 8, the bucket is configured such that a bucket piece opening inwardly in the conveyance width direction is small in size and a bucket piece opening outwardly in the conveyance width direction is large in size. As a result, even when the distance between the centers of preceding and following eggs E adjacent to each other in distribution and conveyance direction 21 is reduced, the bucket pieces holding egg E do not come into contact with each other.

Next, a traveling unit 11 of distributing and conveying unit 3 will be described. As shown in Fig. 4, traveling unit 11 is configured to travel with holding unit 8 coupled thereto. Traveling unit 11 travels in distribution and conveyance direction 21 (an upward direction perpendicular to the sheet of Fig. 4) by a driving mechanism (not shown) such as a motor and an endless chain.

In the present embodiment, as shown in Figs. 2 and 4, holding units 8 are attached to traveling unit 11 in a staggered arrangement along the center line of the conveyance width of eggs E. Since holding units 8 may only hold eggs E such that eggs E are arranged in a staggered manner along the center line of the conveyance width, the present invention is not limited to the case in which holding units 8 are attached to traveling unit 11 in a staggered arrangement.

Next, container conveying unit 7 will be described. As shown in Figs. 2 and 4, container conveying unit 7 is a container conveyor for conveying containers P in container conveyance direction 22. Dogs (not shown) shaped to be fitted into recesses provided in bottom portions of the containers are provided on a conveyance surface of container conveying unit 7. Container conveying unit 7 is configured to hold containers P at equal intervals by the dogs and convey containers P in container conveyance direction 22, and stop at a position where eggs E can be filled into egg housing seats Ps provided in container P. In addition, containers P are supplied from a container supplying unit 5 provided upstream in container conveyance direction 22.

Next, receiving unit 9 will be described. Receiving unit 9 is provided below the center line of the conveyance width of eggs E, and is configured to receive and temporarily house eggs E ejected by holding units 8 as shown in Figs. 4 and 5. In the present embodiment, receiving unit 9 has an opening of 84 mm, which is narrower than 100 mm that is an assumed maximum width when two eggs E are lined up, and which is wider in width of reception of eggs E than 80 mm that is the conveyance width of eggs E shown in Fig. 2. Since the width of reception is wider than the conveyance width as described above, receiving unit 9 can receive eggs E reliably.

Receiving unit 9 receives egg E ejected from holding unit 8, so as to support egg E from below by an egg seat formed of a pair of receiving members 10 attached to a pivot shaft 6. Since the pair of receiving members 10 have inclined portions for receiving egg E, egg E ejected from holding unit 8 slides along the inclination of receiving members 10 and is housed at the position shown in Fig. 4, with the long axis of egg E placed vertically. Particularly when the article to be distributed and conveyed is an egg, the egg has a great curvature at an end portion thereof and is conveyed with a long axis of the egg placed vertically such that the end portion having the great curvature faces downward. Therefore, by employing the shape of the end portion of the egg to allow the egg to slide along the inclined portions of the receiving members, receiving unit 9 can receive the egg reliably.

As shown in Fig. 5, receiving unit 9 is formed of five egg seats, and thus, receiving unit 9 can receive five eggs E ejected from holding units 8. The five egg seats are provided below the center line of the conveyance width of eggs E. Holding unit 8a for holding egg E located on the upstream side in container conveyance direction 22, and holding unit 8b for holding egg E located on the downstream side in container conveyance direction 22 are present as holding units 8. However, the five egg seats are located directly below the center line of the conveyance width of eggs E, and thus, the five egg seats can receive eggs E ejected from both holding units 8a and 8b.

Particularly when eggs E are conveyed at 65 mm that is the conveyance width of eggs E shown in Fig. 3, eggs E can be received more reliably than when eggs E are conveyed at the conveyance width of 80 mm. Since eggs E are arranged in a staggered manner such that the contours of eggs E overlap each other when viewed from distribution and conveyance direction 21 of eggs E as described above, the conveyance width of eggs E becomes smaller than the width when two eggs E are lined up in the conveyance width direction, and thus, receiving unit 9 can receive eggs E reliably.

Receiving unit 9 according to the present embodiment is configured to fill received eggs E into container P on container conveying unit 7. Receiving unit 9 having received five eggs E moves down to the position shown by an alternate long and short dash line in Figs. 4 and 5, pivots about pivot shaft 6, and collectively fills housed five eggs E into egg housing seats Ps of container P.

Furthermore, receiving unit 9 has a pitch changing unit 12 for reducing the interval between housed eggs E, and when receiving unit 9 moves down to the position shown by the alternate long and short dash line in order to fill five eggs E into container P as shown in Fig. 4, the interval of the five egg seats forming receiving unit 9 is narrowed, to thereby reduce the interval between housed eggs E. In the present embodiment, when the interval of the egg seats is narrowed, the egg seats are maintained at equal intervals by the repulsion force of a spring attached to pivot shaft 6.

In the present embodiment, receiving unit 9 has pitch changing unit 12 for reducing the interval between housed eggs E. However, a receiving mechanism for temporarily housing eggs E may be separately provided between receiving unit 9 and container P, and the receiving mechanism may perform pitch change and the operation of filling into container P, instead of performing pitch change in receiving unit 9, for example. With such a configuration, receiving unit 9 can receive eggs E ejected next from holding units 8 while the receiving mechanism is performing pitch change and the operation of filling into container P, and thus, the processing efficiency of distributing and conveying apparatus 1 can be enhanced.

Next, the distributing and ejecting unit according to the present embodiment will be described. The distributing and ejecting unit is formed of holding unit 8 having the function of ejecting egg E onto container conveying unit 7 which is the distribution and ejection location, based on the weight of egg E which is the predetermined classification. Since the distributing and conveying unit may only have the function of conveying a plurality of eggs E in a staggered arrangement along the center line of the conveyance width and ejecting eggs E at the respective distribution and ejection locations, the distributing and conveying unit is not limited to the configuration of holding unit 8 according to the present embodiment.

Next, the operation of grading and packaging apparatus S for eggs E including distributing and conveying apparatus 1 according to the present embodiment will be described with reference to Figs. 1 to 5.

As shown in Fig. 1, eggs E are conveyed in six rows at equal intervals in supply and conveyance direction 20 by supplying and conveying unit 2, with the long axes of eggs E placed horizontally. Eggs E conveyed in six rows by supplying and conveying unit 2 are received by transfer unit 4 at the terminal end of supplying and conveying unit 2. Thereafter, the orientation of the long axes of eggs E is changed into the vertical direction and the arrangement of eggs E is changed into the staggered arrangement, and then, eggs E are transferred to distributing and conveying unit 3. At this time, eggs E are individually weighed by the weighing device provided in transfer unit 4. The results of individual weighing of eggs E are associated with eggs E, respectively, and are subsequently used for classification when the distributing and ejecting unit performs distribution and ejection.

Eggs E are conveyed in six rows in supplying and conveying unit 2, while eggs E are conveyed in one row in a staggered arrangement along the center line of the conveyance width of eggs E in distributing and conveying unit 3. Therefore, the orientation of the long axes of eggs E is changed from the horizontal direction to the vertical direction and the arrangement of eggs E is changed into the staggered arrangement by transfer unit 4, and at the same time, eggs E are transferred to distributing and conveying unit 3 while being accelerated in distribution and conveyance direction 21.

As shown in Fig. 2, eggs E transferred to distributing and conveying unit 3 are conveyed in distribution and conveyance direction 21 by distributing and conveying unit 3, with the plurality of eggs E being arranged in a right-and-left staggered manner along the center line of the conveyance width shown by the alternate long and short dash line. At this time, eggs E are held by either holding unit 8a or holding unit 8b as shown in Figs. 4 and 5.

As shown in Fig. 5, eggs E conveyed while being held by holding units 8 of distributing and conveying unit 3 are ejected at the respective predetermined distribution and ejection locations based on the classification such as weight. Then, eggs E are received and temporarily housed by receiving unit 9.

When receiving unit 9 receives five eggs E, receiving unit 9 fills received eggs E into container P on container conveying unit 7. At this time, receiving unit 9 moves down to the position shown by the alternate long and short dash line in Figs. 4 and 5, pivots about pivot shaft 6, and collectively fills housed five eggs E into egg housing seats Ps of container P. Receiving unit 9 has pitch changing unit 12 for reducing the interval between housed eggs E, and when receiving unit 9 moves down to the position shown by the alternate long and short dash line in order to fill five eggs E into container P as shown in Fig. 4, pitch changing unit 12 reduces the interval between eggs E housed by receiving unit 9.

Containers P into which receiving unit 9 fills eggs E are supplied at equal intervals from container supplying unit 5 provided upstream in container conveyance direction 22, and container conveying unit 7 operates intermittently and conveys containers P in container conveyance direction 22 whenever eggs E are filled into egg housing seats Ps of container P. When ten eggs E are filled into ten egg housing seats Ps provided in container P, eggs E filled into container P are conveyed in a gathered conveyance direction 23 by a gathered conveying unit 13 provided at a terminal end of the container conveying unit, as shown in Fig. 1. Then, eggs E are sealed by a sealing device or the like provided downstream in gathered conveyance direction 23, and are shipped.

Although a ten egg-containing eggbox made of synthetic resin is used as container P in the present embodiment, the present invention is not limited to a particular container. A thirty egg-containing egg tray called "American tray" or "pulp mold tray", and other containers can also be used, for example.

In addition, eggs E are distributed and conveyed based on the weights of eggs E as classification of eggs E. However, classification may also be performed based on cracks or dirt of eggs E, or the presence or absence of blood included in eggs E, for example.

Although description has been given about distribution and conveyance of eggs E as articles in the present embodiment, the present invention is not limited to the eggs. As long as the articles are distributed based on the predetermined classification, the effect of the present invention is produced. Particularly when the article is a spherical article including an egg-shaped article such as egg E, the shape of the spherical article is employed to allow the spherical article to slide along the inclined portions of receiving members 10 when receiving members 10 of receiving unit 9 receive the spherical article, and thus, receiving unit 9 can easily receive the spherical article.

The embodiment disclosed herein is illustrative and not limitative. The present invention is defined by the terms of the claims, rather than the description above, and is intended to include any modifications within the scope and meaning equivalent to the terms of the claims.

### INDUSTRIAL APPLICABILITY

The present invention is effectively used to reduce the impact applied to the articles in the distributing and conveying apparatus.

### REFERENCE SIGNS LIST

1 distributing and conveying apparatus; 2 supplying and conveying unit; 3 distributing and conveying unit; 4 transfer unit; 5 container supplying unit; 6 pivot shaft; 7 container conveying unit; 8 holding unit; 9 receiving unit; 10 receiving member; 11 traveling unit; 12 pitch changing unit; 13 gathered conveying unit; 101 distributing and conveying apparatus; 103 distributing and conveying means; 107 container conveying means; 201 distributing and conveying apparatus; 203 distributing and conveying means; E egg; P container; Ps egg housing seat; S grading and packaging apparatus.

## Claims

1. A distributing and conveying apparatus for distributing articles at respective predetermined locations while conveying the articles, the distributing and conveying apparatus comprising:
a distributing and ejecting unit configured to convey a plurality of articles in a staggered arrangement along a center line of a conveyance width, and eject the articles at respective distribution and ejection locations; and
a receiving unit configured to receive the articles ejected by the distributing and ejecting unit below the center line.

2. The distributing and conveying apparatus according to claim 1, wherein
the articles conveyed by the distributing and ejecting unit are arranged such that contours of the adjacent articles overlap each other when viewed from a conveyance width direction.

3. The distributing and conveying apparatus according to claim 1 or 2, wherein
the articles conveyed by the distributing and ejecting unit are arranged such that contours of the articles overlap each other when viewed from a conveyance direction.

4. The distributing and conveying apparatus according to any one of claims 1 to 3, wherein
a width of reception of the articles by the receiving unit is wider than the conveyance width of the articles conveyed by the distributing and ejecting unit.

5. A grading and packaging apparatus including the distributing and conveying apparatus as recited in any one of claims 1 to 4.

6. A grading and packaging facility including the grading and packaging apparatus as recited in claim 5.

7. A distributing and conveying method for distributing articles at respective predetermined locations while conveying the articles, the distributing and conveying method comprising:
conveying a plurality of articles in a staggered arrangement along a center line of a conveyance width, and ejecting the articles at respective distribution and ejection locations; and
receiving the ejected articles below the center line.
